Europäisches Patentamt

European Patent Office

Office européen des brevets

(19)

(11) **EP 1 085 271 A2**

(12) **EUROPEAN PATENT APPLICATION**

(43) Date of publication:
21.03.2001 Bulletin 2001/12

(51) Int. Cl.⁷: **F24F 11/00**

(21) Application number: **00610094.5**

(22) Date of filing: **18.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.09.1999 DK 132799**

(71) Applicant: **SKOV A/S**
**Glyngoere, 7870 Roslev (DK)**

(72) Inventor: **Veng, Niels**
**7870 Roslev (DK)**

(74) Representative:
**Skoett-Jensen, Knud**
**K. Skoett-Jensen Patentingenioerer A/S**
**Lemmingvej 225**
**8361 Hasselager (DK)**

(54) **A method and a system for controlling livestock ventilation**

(57) It is shown that for any cattle-shed space, it is possible to establish a ventilation control in accordance with the more-or-less important criterion that the air in the shed is held as dry as possible, in that on the other hand it can be accepted that a relatively great variation occurs in the temperature of the air in the shed. Use can be made of a simple control of the air intake and air out- let respectively in the whole of this range of variation for the regulation of the change of air to achieve a characteristic, shed-determined difference in temperature between the outside air and the air in the shed, with which difference the air in the shed will show a least degree of moisture content.

Fig.1

## Description

The present invention concerns a method for controlling cattle shed ventilation equipment and a control unit intended for this purpose. Primarily, the invention concerns installations with natural ventilation, i.e. with permanent inlet and outlet openings with various regulation dampers and means of controlling these in order to achieve a desired ventilation.

New demands concerning the living conditions of livestock require that the farmers change the arrangement of sheds. Use must be made of straw, and there must be more room. The animals must be able to move around freely, whereby they can choose where they want to lie. All this means that the demands concerning temperature in the sheds are much less, in some cases from freezing point to around 20°C. This acceptable range is called the temperature band. This also means that less use is made of insulation in the sheds, which together with fewer animals per m$^2$ means less heat with which to heat up the ventilation air. This has the consequence that the shed becomes more humid because ventilation can not be effected to the same degree.

A humid cattle shed has consequences from the production point of view. Higher humidity enables bacteria and viruses to live longer, whereby the risk of infection in the shed is increased. This will result in more infections, including especially secondary infections. The use of straw, including deep bedding, means that urine and manure remain in the stall and the water must escape by evaporation. This gives rise to demands that the shed must always be held as dry as possible. A humid shed is also known to increase the frequency of mastitis. Moreover, the personnel in the shed find the environment more pleasant when surfaces are not clammy. For the sake of completeness, it must also be mentioned that the shed can also be too dry with increased dust content in the air as a consequence. However, this applies only when the outside climate is warm and dry and when the temperature in the stall already exceeds the temperature band.

For calculations of the climate in the stall, use is made of a heat-balance equation which expresses the involved factors[1.]

$$Q_1 + Q_2 = (k \times A + 1210 \times AC) \times (t_{in} - t_{ex})$$

where

| | |
|---|---|
| $Q_1$ | is the animals' heat production |
| $Q_2$ | is heat from heating plant |
| $k$ | is the average heat transmission coefficient of the building |
| $A$ | is the area of the building's cold surfaces |
| 1210 | is the specific heat of the air |
| $AC$ | is the amount of ventilation air |
| $t_{in}$ | is the inside temperature |

$t_{ex}$ is the outside temperature

It will be seen that with AC moving towards 0, $t_{in} - t_{ex}$ will tend towards ∞. However, this is stopped by the heat loss through the stall building also being increased, whereby a final balance is reached. Correspondingly, it will be seen that with AC moving towards ∞, $t_{in} - t_{ex}$ will move towards 0, which means the same temperature inside as outside.

For cattle sheds, use is also made of a moisture-balance equation in which the factors involved are expressed as follows:

$$g_1 + AC_h \times x_{ex} \times \gamma = AC_h \times x_{in} \times \gamma$$

where

| | |
|---|---|
| $g_1$ | is the animals' production of water vapour per animal unit |
| $AC_h$ | is the amount of ventilation air per animal unit |
| $x_{ex}$ | is the absolute humidity of the outside air |
| $x_{in}$ | is the absolute humidity of the air in the stall |
| $\gamma$ | is the density of the air |

It will be seen that with $AC_h$ moving towards infinity, $x_{in}$ will move towards $x_{ex}$, which means the same moisture content inside as outside. Compared with the heat-balance equation above, it can be deduced that with $AC_h$ moving towards infinity, the inside air will be the same as the outside air.

For $AC_h$ moving towards 0, no moisture will be removed. At the same time, a final temperature will arise according to the heat-balance equation,. From this it can be deduced that the humidity will move towards 100% RH for $AC_h$ moving towards 0.

With the present invention it is endeavoured to provide a method and a ventilation system, or a control of such a system, whereby in an extremely simple manner it is possible to regulate the change of air in a cattle shed in order to achieve the lowest content of moisture in the air in the shed at different air temperatures. This control can be simple, precisely when on the basis discussed above it is not necessary at the same time to make use of any real form of temperature control.

The invention is based on the consideration that on the basis of the two simple equations above, it is possible to calculate or draw up a curve sequence for the relative humidity of the air in the shed as a function of an air change in any relevant shed, and herewith to determine a well-defined minimum of this sequence between the high values for the humidity, which will arise both with very low and very highest air change. When this minimum has first been determined, there will herewith also be determined the amount of ventilation air which is suitable for bringing about a moisture minimisation at changing temperatures, and a relevant control can thus be established precisely by maintaining the relevant amount (m³/h) of ventilation air regardless of variations in the air temperature.

With advanced controlled ventilation systems, it will probably be possible to control the actual amount of air through the system, but with the invention it is especially aimed at providing more simple systems with which there are merely provided regulation means for more-or-less extensive blocking of various intake and/or outlet openings for a purely natural ventilation of the shed space, typically by use of ventilation openings respectively in the walls and roof of the shed, or its chimney tops. With this form of system, there is no possibility of initiating a control for any certain amount of ventilation air, because this amount of air will already be influenced by the occurrence of greater or lower wind pressures.

However, in accordance with the invention it will still be possible, also with such systems, to utilise the said overall control principle, namely in that with the discussed initial determination of the ideal air change, at the same time there will be determined an associated difference in temperature between the outer and the inside air at which the relevant air change occurs. With the invention it has been found fully possible and sufficient to control the system for maintaining this temperature difference regardless of the temperature level, which will provide the same result.

With a relevant regulation sequence according to the invention, a controlling of the air change as such can thus be dispensed with, in that there can merely be effected a regulation hereof until it is registered that the relevant temperature difference has been re-established. Such a regulation will normally be able to be effected by use of previously-existing damper equipment.

It must be mentioned that the relevant temperature difference will typically be in the order of 3-7°C at the most for well-insulated cattle sheds.

When the cattle-shed temperature reaches up to or above an operative maximum of e.g. 20°C, the system must be opened more and more in order to counteract an excess temperature until the system is at full capacity, i.e. at full opening. Correspondingly, the system must be closed to a minimum opening when the temperature falls to an operative minimum of e.g. 0° in order to counteract further cooling down, but while ensuring a certain ventilation for oxygen supply for the animals.

In the following, the invention is explained with reference to the drawing, in which

fig. 1 is a schematic cross-section of a cattle shed,
fig. 2 is a graphic illustration of the relationship between the content of moisture in the air in the cattle shed and the change of air in the cattle shed, and
fig. 3 shows a set of curves which illustrate a regulation sequence according to the invention.

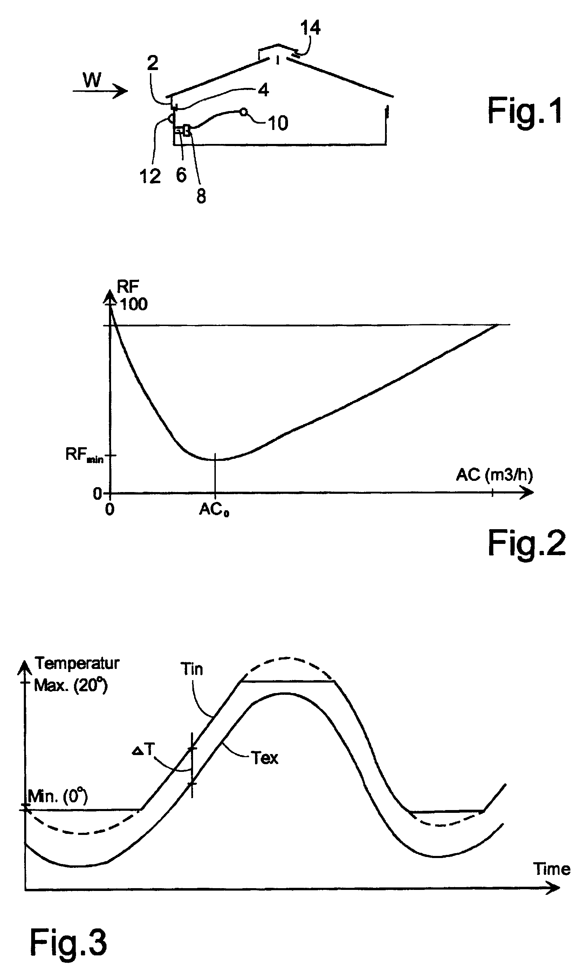

The cattle shed shown in fig. 1 is provided with wall-mounted air valves 2 with closing dampers 4 which can be regulated by means of drive connections to a drive station 6 which comprises a control unit 8 connected to internal and external temperature sensors 10. and 12. Other ventilation openings 14, with or without regulation dampers, are provided in the ridge of the roof. The air in the shed is kept warm by the heat from the animals. The change of air arising in the shed will greatly depend on the strength and direction of the wind W. and it is already known to compensate for this by regulating the valve dampers 4 with the object of controlling the temperature of the air in the shed.

The curve shown in fig. 2 expresses the above-mentioned relationship between the relative humidity RM of the air in the shed and the change of air in the shed AC, so that for a given shed this can be deduced from the two equations given above. For the relevant shed, it will hereby be possible to determine an air change $AC_o$ with which the humidity arises with a minimum value $RF_{min}$. By an analysis of the heat balance equation, it is seen that the temperature difference $t_{in} - t_{ex}$ between the inner and outer air for a given shed is clearly dependent on the air change AC. For each individual shed, it is thus possible to specify a certain $\Delta t$ where $AC_o$ is fulfilled, and the control of the ventilation can thus take place after precisely this temperature difference has been achieved.

The regulation of the air change in the shed takes place by means of the existing valve dampers 4, and regulation is thus effected solely in accordance with the criterion that the achieving of the relevant special temperature difference is registered via the sensors 10 and 12.

Fig. 3 shows an envisaged regulation sequence between maximum and minimum, where the lower curve $T_{ex}$ shows variations in the outside temperature, while the upper curve $T_{in}$ shows a corresponding variation in the temperature of the air in the shed. The said special temperature difference is calculated as $\Delta t$, and it will be seen that the two curves extend parallel along the whole extent between greatest and lowest operational temperature of the shed air, namely between 0° and 20°. On a 24-hour basis, the curves will fluctuate within this range following the outside temperature, with the curve Tin lying permanently above at a distance of $\Delta t$, apart from possible small ripples in connection with variations at greater changes in $T_{ex}$. Despite such ripples, the air in the shed will thus constantly be able to be held at the possible minimum of humidity.

As will be seen in fig. 3, the regulation curve for $T_{in}$ must be cut off at the upper and lower limits of the temperature range, in that in these areas deviations must be accepted from the principal control criterion with regard to dry air, partly for ensuring an effective cooling at high outside temperatures, and partly to avoid frost in the shed at low values of $T_{ex}$.

It has been found that the emission of carbon dioxide by the animals is proportional to their production of heat, and on this basis it has been found possible to regulate in accordance with the content of carbon dioxide in the shed instead of in accordance with $\Delta T$. However, this will require quite sensitive $CO_2$ measuring equipment, the reason being that the relevant $CO_2$ variations will be relatively small.

## Claims

1. Method for controlling livestock ventilation in a cattle shed by the use of means for the regulation of the air change in the shed, and a programmable control unit for controlling these regulation means on the basis of a registration of the temperature of the air in the shed in accordance with predetermined criteria, **characterised** in that the controlling of the regulation means is generally effected in accordance with the criterion that the temperature of the air in the shed shall be regulated to a value which is so much higher than the temperature of the outside air as to correspond to the difference in temperature ($\Delta t$) at which a minimum of moisture in the air is determined for the relevant shed.

2. Method according to claim 1, by which said difference in temperature is corrected in connection with substantial changes in the operating conditions in the shed, including changes to animals of a different kind or in the change of conditions, including changes in the heat insulation of the shed.

3. Method according to claim 1, by which the control in accordance with said criterion is suspended in the event of the temperature of the air in the shed falling below a predetermined minimum.

4. Method according to claim 1, by which the control in accordance with said criterion is suspended if a predetermined maximum temperature of the shed air or the outside air is exceeded.

5. Method according to claim 1, by which as an alternative to the control in accordance with said difference in temperature, use is made of an analogue control following registered changes in the content of carbon dioxide in the air in the shed for achieving a minimal humidity in the shed.

6. Ventilation system for operation in accordance with the method according to claim 1, comprising controllable means for regulating the change of air in the shed, and a control unit for regulating these means in accordance with predetermined criteria, **characterised** in that the control unit is programmed to bring about said regulation for the achieving of the least degree of moisture in the air in the shed in the whole range of regulation.

7. Ventilation system according to claim 7, by which the control unit is arranged at changing temperatures to regulate the air change for controlling the temperature of the shed air, so that this assumes a value which is so much higher than the registered temperature of the outside air that it corresponds to a predetermined temperature difference ($\Delta t$) which, for the relevant shed, is found to be conditional for the least degree of moisture absorption in the air in the shed.

8. Ventilation system according to claim 7, whereby the control unit is programmed to suspend said regulation depending on a registration of a temperature which lies under a predetermined minimum temperature of the air in the shed, and also of a temperature which exceeds a predetermined maximum temperature of the air in the shed or the outside temperature.

9. Ventilation system according to claim 7, and comprising means for the measuring of changes in the content of carbon dioxide in the air in the shed as the basis for said regulation.

EP 1 085 271 A2

Fig.1

Fig.2

Fig.3

5